# EUROPEAN PATENT APPLICATION

(11) **EP 4 290 950 A1**
(43) Date of publication of application: **13.12.2023**
(21) Application number: 21923663.5
(22) Date of filing: 02.02.2021
(51) Int. Cl.: H04W 68/02

(54) **METHOD AND APPARATUS FOR DETERMINING USER PAGING GROUP, AND USER EQUIPMENT AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: dompatent von Kreisler Selting Werner - Partnerschaft von Patent- und Rechtsanwälten mbB
(86) International application number: PCT/CN2021/074858
(87) International publication number: WO 2022/165633

(57) **Abstract**

Provided are a method and apparatus for determining a user paging group, and a user equipment and a storage medium, which belong to the technical field of wireless communications. The method comprises: receiving a first paging group parameter and/or a second paging group parameter sent by a network-side device, wherein the first paging group parameter is determined by a core network device, and the second paging group parameter is determined by an access network device; and determining a paging group of a UE according to the first paging group parameter and/or the second paging group parameter. Therefore, by means of the method for determining a user paging group, a UE determines a paging group of the UE by negotiating with a core network and/or an access network, thereby effectively determining the paging group of the UE, and ensuring the consistency of understanding of the paging group between a network side and the UE.

## Description

### TECHNICAL FIELD

The disclosure relates to a field of wireless communication technology, in particular to a method for determining a user paging group, an apparatus for determining a user paging group, a user equipment (UE) and a storage medium.

### BACKGROUND

In a mobile communication system, a core network and a base station can wake up a user equipment (UE) or send data to the UE by paging. For some UEs with similar paging frequencies, or when the same data needs to be sent to multiple UEs, these UEs can be classified into one user group, so that the core network and the base station can simultaneously page the UEs belonging to the same user group.

In the related art, a network side and the UE need to negotiate on the user group, to achieve consistency in understanding of the network and the UE about the user group. However, a specific scheme for negotiating the user group between the network and the UE does not yet exist, so that it is difficult to effectively determine a user paging group.

### SUMMARY

The disclosure provides a method for determining a user paging group, an apparatus for determining a user paging group, a UE and a storage medium, which are used to solve the problem that, in the related art, a network side and a UE need to negotiate on a user group to achieve consistency in understanding of the network and the UE about the user group, but a specific scheme for negotiating the user group between the network and the UE does not yet exist, so that it is difficult to effectively determine a user paging group.

According to a first aspect of embodiments of the disclosure, a method for determining a user paging group is provided. The method is applied to a UE. The method includes: receiving a first paging group parameter and/or a second paging group parameter sent by a network side device, in which the first paging group parameter is determined by a core network device, and the second paging group parameter is determined by an access network device; and determining a paging group of the UE based on the first paging group parameter and/or the second paging group parameter.

According to a second aspect of the embodiments of the disclosure, a method for determining a user paging group is provided. The method is applied to a network side device. The method includes: sending a first paging group parameter and/or a second paging group parameter to a UE, in which the first paging group parameter is determined by a core network device, and the second paging group parameter is determined by an access network device.

According to a third aspect of the embodiments of the disclosure, an apparatus for determining a user paging group is provided. The apparatus is applied to a UE. The apparatus includes: a receiving module, configured to receive a first paging group parameter and/or a second paging group parameter sent by a network side device, in which the first paging group parameter is determined by a core network device, and the second paging group parameter is determined by an access network device; and a determining module, configured to determine a paging group of the UE based on the first paging group parameter and/or the second paging group parameter.

According to a fourth aspect of the embodiments of the disclosure, an apparatus for determining a user paging group is provided. The apparatus is applied to a network side device. The apparatus includes: a sending module, configured to send a first paging group parameter and/or a second paging group parameter to a UE, in which the first paging group parameter is determined by a core network device, and the second paging group parameter is determined by an access network device.

According to a fifth aspect of the embodiments of the disclosure, a UE is provided. The UE includes: a transceiver, a memory, and a processor connected to the transceiver and the memory respectively. The processor is configured to control the transceiver to transmit and receive wireless signals and is capable of performing the following operations by executing computer-executable instructions on the memory:
receiving a first paging group parameter and/or a second paging group parameter sent by a network side device, in which the first paging group parameter is determined by a core network device, and the second paging group parameter is determined by an access network device; and
determining a paging group of the UE based on the first paging group parameter and/or the second paging group parameter.

According to a sixth aspect of the embodiments of the disclosure, a network side device is provided. The network side device includes: a transceiver, a memory, and a processor connected to the transceiver and the memory respectively. The processor is configured to control the transceiver to transmit and receive wireless signals and is capable of performing the following operation by executing computer-executable instructions on the memory:
sending a first paging group parameter and/or a second paging group parameter to a UE, in which the first paging group parameter is determined by a core network device, and the second paging group parameter is determined by an access network device.

According to a seventh aspect of the embodiments of the disclosure, a system for determining a user paging group is provided. The system includes a UE and a network side device. The UE includes: a transceiver, a memory, and a processor connected to the transceiver and the memory respectively. The processor is configured to control the transceiver to transmit and receive wireless signals and is capable of performing the following operations by executing computer-executable instructions on the memory:
receiving a first paging group parameter and/or a second paging group parameter sent by a network side device, in which the first paging group parameter is determined by a core network device, and the second paging group parameter is determined by an access network device; and
determining a paging group of the UE based on the first paging group parameter and/or the second paging group parameter.

The network side device includes: a transceiver, a memory, and a processor connected to the transceiver and the memory respectively. The processor is configured to control the transceiver to transmit and receive wireless signals and is capable of performing the following operation by executing computer-executable instructions on the memory:
sending a first paging group parameter and/or a second paging group parameter to a UE, in which the first paging group parameter is determined by a core network device, and the second paging group parameter is determined by an access network device.

According to an eighth aspect of the embodiments of the disclosure, a computer storage medium having computer-executable instructions stored thereon is provided. When the computer-executable instructions are executed by a processor, the above method for determining a user paging group is implemented.

According to a ninth aspect of the embodiments of the disclosure, a computer program product including computer programs is provided. When the computer programs are executed by a processor, the above method for determining a user paging group is implemented.

According to a tenth aspect of the embodiments of the disclosure, a computer program is provided. When the computer program is executed by a processor, the above method for determining a user paging group is implemented.

With the method for determining a user paging group, the apparatus for determining a user paging group, the UE and the computer-readable storage medium, the computer program product and the computer program provided by the embodiments of the disclosure, the first paging group parameter determined by the core network device and/or the second paging group parameter determined by the access network device are received, and the paging group of the UE is determined based on the first paging group parameter and/or the second paging group parameter. Therefore, the UE negotiates with the core network and/or the access network to determine the paging group of the UE, thereby effectively determining the paging group of the UE and ensuring the consistency in the understanding of the network side and the UE about the paging group.

Additional aspects and advantages of embodiments of disclosure will be given in part in the following descriptions, become apparent in part from the following descriptions, or be learned from the practice of the embodiments of the disclosure.

### BRIEF DESCRIPTION OF THE DRAWINGS

The above and additional aspects and advantages of embodiments of the disclosure will become apparent and more readily appreciated from the following descriptions made with reference to the accompanying drawings, in which:
FIG. 1 is a flowchart of a method for determining a user paging group provided by an embodiment of the disclosure.
FIG. 2 is a flowchart of a method for determining a user paging group provided by an embodiment of the disclosure.
FIG. 3 is a flowchart of a method for determining a user paging group provided by an embodiment of the disclosure.
FIG. 4 is a flowchart of a method for determining a user paging group provided by an embodiment of the disclosure.
FIG. 5 is a flowchart of a method for determining a user paging group provided by an embodiment of the disclosure.
FIG. 6 is a block diagram of an apparatus for determining a user paging group provided by an embodiment of the disclosure.
FIG. 7 is a block diagram of an apparatus for determining a user paging group provided by an embodiment of the disclosure.
FIG. 8 is a block diagram of a UE provided by an embodiment of the disclosure.
FIG. 9 is a block diagram of a base station provided by an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

Terms used in the embodiments of the disclosure are used solely for the purpose of describing specific embodiments and are not intended to limit the embodiments of the disclosure. The singular forms "a" and "the" as used in this disclosure and in the appended claims are also intended to encompass the plural forms, unless the context clearly indicates otherwise. It should be understood that the term "and/or" as used herein refers to and encompasses any or all possible combinations of one or more of the associated listed items.

It should be understood that while the terms first, second, third, etc. may be employed in embodiments of the disclosure to describe various types of information, such information should not be limited to these terms. These terms are only used to distinguish the same type of information from each another. For example, without departing from the scope of embodiments of the disclosure, first information may also be referred to as second information, and similarly, second information may be referred to as first information. Depending on the context, the terms "in response to" and "if' as used herein may be interpreted as "when", "while" or "in response to determining".

The embodiments of the disclosure are described in detail below, and examples of the embodiments are shown in the accompanying drawings, in which the same or similar symbols throughout indicate the same or similar elements. The embodiments described below with reference to the accompanying drawings are exemplary and are intended to be used to explain the disclosure and are not to be construed as a limitation of the disclosure.

The embodiments of the disclosure provide a method for determining a user paging group to solve the problem that, in the related art, a network side and a UE need to negotiate on a user group to achieve consistency in understanding of the network and the UE about the user group, but a specific scheme for negotiating the user group between the network and the UE does not yet exist, so that it is difficult to effectively determine a user paging group.

According to the method for determining a user paging group of the embodiments of the disclosure, a first paging group parameter determined by a core network device and/or a second paging group parameter determined by an access network device are received, and a paging group of the UE is determined based on the first paging group parameter and/or the second paging group parameter. Therefore, the UE negotiates with the core network and/or the access network to determine the paging group of the UE, thereby effectively determining the paging group of the UE and ensuring the consistency in the understanding of the network side and the UE about the paging group.

A method for determining a user paging group, an apparatus for determining a user paging group, a UE and a storage medium provided by the disclosure are described in detail below with reference to the accompanying drawings.

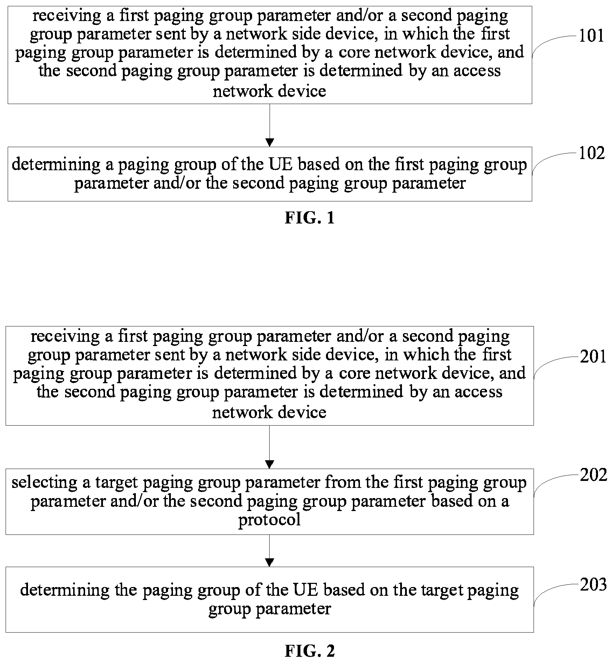

FIG. 1 is a flowchart of a method for determining a user paging group provided by an embodiment of the disclosure. The method is applied to a UE.

As illustrated in FIG. 1, the method for determining a user paging group includes the following steps.

At step 101, a first paging group parameter and/or a second paging group parameter sent by a network side device are received, in which the first paging group parameter is determined by a core network device, and the second paging group parameter is determined by an access network device.

It is noted that the method for determining a user paging group of the embodiment of the disclosure is applied to any UE. The UE may be a device that provides voice and/or data connectivity to a user. The UE may communicate with one or more core networks via a radio access network (RAN). The UE may be an Internet of Things (IoT) terminal, such as a sensor device, a cell phone (or "cellular" phone), and a computer with an IoT terminal. The UE 110 may also be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, or a user agent. Alternatively, the UE may be an unmanned aerial vehicle device. Alternatively, the UE may be an in-vehicle device, for example, an electronic control unit (ECU) having a wireless communication function, or a wireless terminal connected externally to an ECU. Alternatively, the UE can also be a roadside device, such as, a street light, a signal light, or other roadside devices having a wireless communication function.

The network side device can be a core network device or an access network device.

The first paging group parameter may be a probability of the core network device paging the UE, or may be a paging group identification configured by the core network for the UE, which is not limited in the embodiments of the disclosure.

The second paging group parameter may be a probability of the access network device paging the UE, or may be a paging group identification configured by the access network device for the UE, which is not limited in the embodiments of the disclosure.

The access network device may be a base station.

In the embodiment of the disclosure, since both the core network device and the access network device can page the UE, when negotiating with the UE on the paging group, the network side may negotiate with the UE through the core network device or the access network device, so that the UE may obtain the first paging group parameter determined by the core network device or the second paging group parameter determined by the access network device separately. Alternatively, the UE may obtain the first paging group parameter and the second paging group parameter simultaneously.

As a possible implementation, the UE can receive the first paging group parameter and/or the second paging group parameter sent by the access network device via a broadcast signaling or a dedicated signaling.

For example, the terminal receives the first paging group parameter and/or the second paging group parameter via a radio resource control (RRC) connection release message.

In the embodiment of the disclosure, the method for determining a user paging group of the embodiment of the disclosure may be used to determine a paging group of a UE that is in an idle state or an inactive state. The first paging group parameter and the second paging group parameter can be determined and received differently when the UE is in different states, which will be described below in detail by assuming that the UE is in an idle state and in an inactive state, respectively.

As a possible implementation, when the UE is in the idle state, the first paging group parameter is determined by negotiating with the core network device through a non-access stratum (NAS) procedure.

It should be noted that, since the core network device can communicate with the UE directly when the UE is in the idle state, if the core network device needs to negotiate the paging group with the UE, the core network device can negotiate with the UE directly through the NAS procedure to determine the first paging group parameter, and send the first paging group parameter to the UE. For example, the core network device can negotiate the first paging group parameter with the UE through a tracking area update (TAU) procedure, or an attach procedure.

As a possible implementation, when the UE is in the inactive state, the first paging group parameter is determined by the access network device based on auxiliary information provided by the core network device and/or auxiliary information obtained from the UE. As an example, the access network device sends the first paging group parameter sent by the core network device to the UE through transparent transmission.

It should be noted that since the core network device cannot communicate with the UE directly when the UE is in the inactive state, if the core network device needs to negotiate the paging group with the UE, the core network device can provide auxiliary information to the access network device through a UE context request/response message, so that the access network device can determine the first paging group parameter based on the auxiliary information, and send the first paging group parameter to the UE.

As a possible implementation, the access network device can send the second paging group parameter to the UE.

As an example, the second paging group parameter can be determined by the access network device based on the auxiliary information provided by the core network device and/or the auxiliary information obtained from the UE. The auxiliary information is sent by the core network device to the access network device.

As an example, the second paging group parameter may be determined by the access network device based on auxiliary information provided by the terminal in a connected state. As a preferred embodiment, the auxiliary information may include, for example, a paging probability counted by the UE.

It should be noted that when the UE is in the idle state or in the inactive state, the access network device may send the determined second paging group parameter to the UE via a RRC message, a broadcast signaling or a dedicated signaling when it needs to negotiate the paging group with the UE. Moreover, the access network device may also obtain auxiliary information provided by the core network device via the UE context request/response message, to determine the second paging group parameter based on the auxiliary information.

As a possible implementation, when the access network device is an anchor base station, it forwards the second paging group parameter to a non-anchor base station via an interface message between base stations.

The anchor base station may refer to a base station that has established a connection with the core network device, and the non-anchor base station may refer to a base station that has not established a connection with the core network device.

It should be noted that since the non-anchor base station has not established a connection with the core network device, when the base station needs to determine the second paging group parameter based on the auxiliary information provided by the core network device, the non-anchor base station is unable to obtain the auxiliary information from the core network device, and thus the second paging group parameter cannot be determined. Therefore, after determining the second paging group parameter based on the auxiliary information provided by the core network device, the anchor base station can forward the second paging group parameter to the non-anchor base station through the interface message between the base stations, so that the non-anchor base station can send the second paging group parameter to the UE within its coverage.

At step 102, a paging group of the UE is determined based on the first paging group parameter and/or the second paging group parameter.

In the embodiment of the disclosure, after receiving the first paging group parameter and/or the second paging group parameter, the UE may determine the paging group of the UE based on at least one of the first paging group parameter and the second paging group parameter.

As an example, if the UE acquires only one of the first paging group parameter and the second paging group parameter, the UE may determine the acquired paging group parameter as the paging group.

According to the method for determining a user paging group provided by the embodiment of the disclosure, the first paging group parameter determined by the core network device and/or the second paging group parameter determined by the access network device are received, and the paging group of the UE is determined based on the first paging group parameter and/or the second paging group parameter. Therefore, the UE negotiates with the core network and/or the access network to determine the paging group of the UE, thereby effectively determining the paging group of the UE and ensuring the consistency in the understanding of the network side and the UE about the paging group.

As a possible implementation of the disclosure, the network side can specify the way for the UE to determine a paging group based on the first paging group parameter and the second paging group parameter through a protocol in advance.

Another method for determining a user paging group provided by the embodiments of the disclosure is further described below in combination with FIG. 2.

FIG. 2 is a flowchart of a method for determining a user paging group provided by an embodiment of the disclosure. The method is applied to a UE.

As illustrated in FIG. 2, the method for determining a user paging group includes the following steps.

At step 201, a first paging group parameter and/or a second paging group parameter sent by a network side device are received, in which the first paging group parameter is determined by a core network device, and the second paging group parameter is determined by an access network device.

In the embodiment of the disclosure, step 201 may be realized in any implementation of the various embodiments of the disclosure, which is not limited in the embodiments of the disclosure and will not be repeated.

At step 202, a target paging group parameter is selected from the first paging group parameter and/or the second paging group parameter based on a protocol.

The target paging group parameter is a paging group parameter selected by the UE for determining a paging group.

As a possible implementation, the network side may specify priorities of the first paging group parameter and the second paging group parameter through the protocol, so that the UE may select the target paging group parameter from the first paging group parameter and the second paging group parameter according to the priorities. That is, in a possible implementation of the embodiments of the disclosure, the above first paging group parameter and/or second paging group parameter have a first priority and/or a second priority, respectively. Correspondingly, the above step 202 may include:

selecting the target paging group parameter from the first paging group parameter and/or the second paging group parameter based on the first priority and the second priority.

In the embodiment of the disclosure, the network side specifies the first priority of the first paging group parameter and the second priority of the second paging group parameter through the protocol, if the UE acquires only one of the first paging group parameter and the second paging group parameter, the UE can determine the acquired paging group parameter as the target paging group parameter. If the UE obtains both the first paging group parameter and the second paging group parameter, the UE can determine the paging group parameter with the higher priority as the target paging group parameter based on the first priority of the first paging group parameter and the second priority of the second paging group parameter.

For example, if the first priority is higher than the second priority, when the UE obtains both the first paging group parameter and the second paging group parameter, the UE may determine the first paging group parameter as the target paging group parameter. If the first priority is lower than the second priority, when the UE obtains both the first paging group parameter and the second paging group parameter, the UE may determine the second paging group parameter as the target paging group parameter.

As another possible implementation, the network side may also specify through the protocol that the UE determines the target paging packet parameter based on a value of the acquired paging group parameter value. That is, in a possible implementation of the embodiments of the disclosure, the above step 202 may include:
selecting a maximum value or a minimum value of the first paging group parameter and/or the second paging group parameter, the first paging group parameter or the second paging group parameter, as the target paging group parameter.

In the embodiment of the disclosure, if the UE only acquires one of the first paging group parameter and the second paging group parameter, the UE may determine the acquired paging group parameter as the target paging group parameter. If the UE acquires both the first paging group parameter and the second paging group parameter, the UE may determine the maximum value of the first paging group parameter and the second paging group parameter as the target paging group parameter, or the minimum value of the first paging group parameter and the second paging group parameter as the target paging group parameter based on values of the first paging group parameter and the second paging group parameter.

As an example, the network side specifies in the protocol that the UE may select the maximum value of the first paging group parameter and the second paging group parameter as the target paging group parameter. When the UE acquires both the first paging group parameter and the second paging group parameter, the UE determines the maximum value of the first paging group parameter and the second paging group parameter as the target paging group parameter.

As an example, the network side specifies through the protocol that the UE may select the minimum value of the first paging group parameter and the second paging group parameter as the target paging group parameter. When the UE obtains both the first paging group parameter and the second paging group parameter, it can determine the minimum value of the first paging group parameter and the second paging group parameter as the target paging group parameter.

As an example, the network side specifies through the protocol that the UE may select the first paging group parameter or the second paging group parameter as the target paging group parameter. As a preferred embodiment, for the user in the idle state, the first paging group parameter is selected as the target paging group parameter according to the protocol. For the user in the inactive state, the second paging group parameter is selected as the target paging group parameter according to the protocol.

As a possible implementation, the network side can also specify through the protocol that the UE may determine the target paging group parameter based on a state of the UE. That is, in a possible implementation of the embodiments of the disclosure, before step 202, the method further includes:
determining that the UE is in an idle state or an inactive state.

Correspondingly, the above step 202 further includes:
selecting the target paging group parameter from the first paging group parameter and/or the second paging group parameter based on the state of the UE.

In the embodiment of the disclosure, the UE may receive the first paging group parameter and/or the second paging group parameter when it is in the idle state or in the inactive state. Therefore, the network side may specify through the protocol that the UE determines the target paging group parameter according to its own state.

As an example, if the UE acquires both the first paging group parameter and the second paging group parameter, the UE may determine the first paging group parameter as the target paging group parameter when it is in the idle state, and the UE may determine the second paging group parameter as the target paging group parameter when it is in the inactive state.

As a possible implementation, the network side may also specify through the protocol that the UE monitors different types of paging with different target paging group parameters. That is, in a possible implementation of the embodiment of the disclosure, the above step 202 may include:
determining a paging type monitored by the UE; and
selecting the target paging group parameter from the first paging group parameter and/or the second paging group parameter based on the paging type monitored by the UE.

The paging type may include a core network paging and a RAN paging.

In the embodiment of the disclosure, both the core network device and the access network device can page the UE as needed, and the network side can configure, through a configuration instruction, the UE to use different paging groups when monitoring different types of paging. That is, when the UE acquires both the first paging group parameter and the second paging group parameter, it can determine different target paging group parameters according to the paging type to be monitored currently.

As an example, if the UE obtains both the first paging group parameter and the second paging group parameter, the UE can determine the first paging group parameter as the target paging group parameter when the paging type monitored by the UE is the core network paging, and the UE can determine the second paging group parameter as the target paging group parameter when the paging type monitored by the UE is the RAN paging.

At step 203, a paging group of the UE is determined based on the target paging group parameter.

In the embodiment of the disclosure, after determining the target paging group parameter, the UE may determine the target paging group parameter as the paging group of the UE.

According to the method for determining a user paging group provided by the embodiment of the disclosure, the first paging group parameter determined by the core network device and/or the second paging group parameter determined by the access network device are received, the target paging group parameter is selected from the first paging group parameter and/or the second paging group parameter according to the protocol, and the paging group of the UE is determined based on the target paging group parameter. Therefore, the UE negotiates with the core network and/or the access network, to select the target paging group parameter from the first paging group parameter and/or the second paging group parameter according to the protocol and determine the paging group of the UE, thereby effectively determining the paging group of the UE and ensuring the consistency in the understanding of the network side and the UE about the paging group.

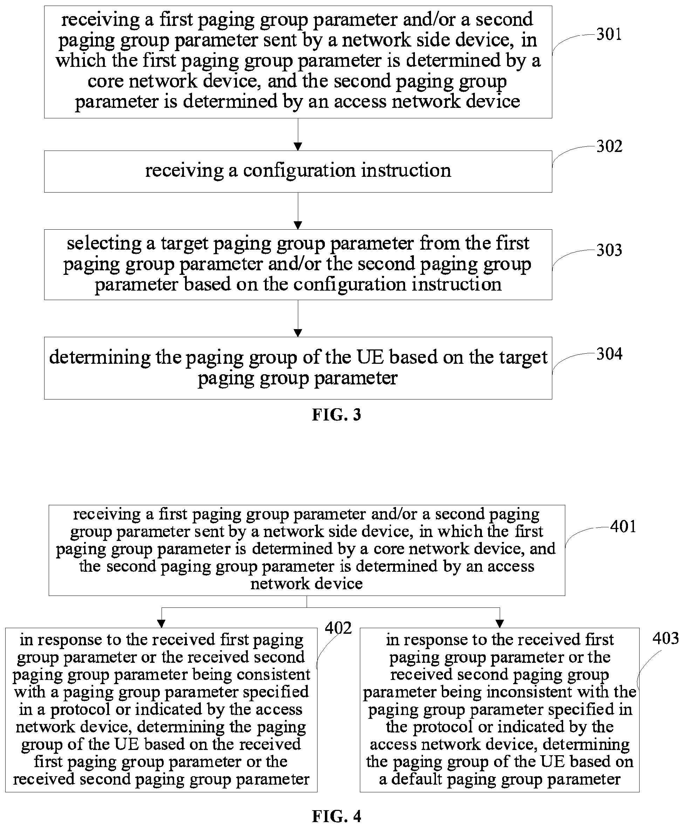

Another method for determining a user paging group provided by the embodiments of the disclosure is further described below in combination with FIG. 3.

FIG. 3 is a flowchart of a method for determining a user paging group provided by an embodiment of the disclosure. The method is applied to a UE.

As illustrated in FIG. 3, the method for determining a user paging group includes the following steps.

At step 301, a first paging group parameter and/or a second paging group parameter sent by a network side device are received, in which the first paging group parameter is determined by a core network device, and the second paging group parameter is determined by an access network device.

In the embodiment of the disclosure, step 301 may be realized in any implementation of the various embodiments of the disclosure, which is not limited in the embodiments of the disclosure and will not be repeated.

At step 302, a configuration instruction is received.

In the embodiment of the disclosure, the network side can configure the way that the UE selects the paging group parameter by sending the configuration instruction to the UE.

As a possible implementation, the network side can configure, through the configuration instruction, the UE to select the target paging group parameter from the first paging group parameter and the second paging group parameter according to its own state. Alternatively, it can also configure, through the configuration instruction, the UE to select the target paging group parameter from the first paging group parameter and the second paging group parameter according to the paging type currently monitored by the UE.

At step 303, a target paging group parameter is selected from the first paging group parameter and/or the second paging group parameter based on the configuration instruction.

As a possible implementation, the network side may configure, through the configuration instruction, the UE to determine the target paging grouping parameter based on its own state. That is, in a possible implementation of the embodiment of the disclosure, before the above step 301, the method includes:
determining that the UE is in an idle state or an inactive state.

Correspondingly, the above step 303 may include:
selecting the target paging group parameter from the first paging group parameter and/or the second paging group parameter based on the state of the UE.

In the embodiment of the disclosure, the UE can receive the first paging group parameter and/or the second paging group parameter when it is in the idle state or in the inactive state. Therefore, the network side can configure, through the configuration instruction, the UE to determine the target paging group parameter based on its own state.

As an example, if the UE obtains both the first paging group parameter and the second paging group parameter, the UE can determine the first paging group parameter as the target paging group parameter when the UE is in the idle state, and the UE can determine the second paging group parameter as the target paging group parameter when the UE is in the inactive state.

As a possible implementation, the network side may also configure the UE to monitor different types of paging with different target paging group parameters. That is, in a possible implementation of the embodiment of the disclosure, the above step 303 may include:
determining a paging type monitored by the UE; and
selecting the target paging group parameter from the first paging group parameter and/or the second paging group parameter based on the paging type monitored by the UE.

The paging type may include a core network paging and a RAN paging.

In the embodiment of the disclosure, both the core network device and the access network device can page the UE as needed, and the network side can configure, through the configuration instruction, the UE to use different paging groups when monitoring different types of paging. That is, when the UE acquires both the first paging group parameter and the second paging group parameter, it can determine different target paging group parameters according to the paging type to be monitored currently.

As an example, if the UE obtains both the first paging group parameter and the second paging group parameter, the UE can determine the first paging group parameter as the target paging group parameter when the paging type monitored by the UE is the core network paging, and the UE can determine the second paging group parameter as the target paging group parameter when the paging type monitored by the UE is the RAN paging.

At step 304, a paging group of the UE is determined based on the target paging group parameter.

In the embodiment of the disclosure, step 304 may be realized in any implementation of the various embodiments of the disclosure, which is not limited in the embodiments of the disclosure and will not be repeated.

According to the method for determining a user paging group provided by the embodiment of the disclosure, the first paging group parameter determined by the core network device and/or the second paging group parameter determined by the access network device are received, the target paging group parameter is selected from the first paging group parameter and/or the second paging group parameter according to the configuration instruction, and the paging group of the UE is determined based on the target paging group parameter. Therefore, the UE negotiates with the core network and/or the access network, to select the target paging group parameter from the first paging group parameter and/or the second paging group parameter according to the configuration instruction and determine the paging group of the UE, thereby effectively determining the paging group of the UE and ensuring the consistency in the understanding of the network side and the UE about the paging group.

Another method for determining a user paging group provided by the embodiments of the disclosure is further described below in combination with FIG. 4.

FIG. 4 is a flowchart of a method for determining a user paging group provided by an embodiment of the disclosure. The method is applied to a UE.

As illustrated in FIG. 4, the method for determining a user paging group includes the following steps.

At step 401, a first paging group parameter and/or a second paging group parameter sent by a network side device are received, in which the first paging group parameter is determined by a core network device, and the second paging group parameter is determined by an access network device.

In the embodiment of the disclosure, step 401 may be realized in any implementation of the various embodiments of the disclosure, which is not limited in the embodiments of the disclosure and will not be repeated.

At step 402, in response to the received first paging group parameter or the received second paging group parameter being consistent with a paging group parameter specified in a protocol or indicated by the access network device, a paging group of the UE is determined based on the received first paging group parameter or the received second paging group parameter.

At step 403, in response to the received first paging group parameter or the received second paging group parameter being inconsistent with the paging group parameter specified in the protocol or indicated by the access network device, the paging group of the UE is determined based on a default paging group parameter.

In the embodiment of the disclosure, the network side may configure a parameter used by the UE to determine the paging group via a protocol or an indication by the access network device. Therefore, when the UE receives only one of the first paging group parameter and the second paging group parameter, if the paging group parameter received by the UE is consistent with the paging group parameter specified by the protocol or indicated by the access network device, the UE may determine the paging group of the UE based on the received paging group parameter, otherwise, the UE may determine the paging group of the UE based on the default paging group parameter configured in advance.

As an example, if the paging group parameter specified in the protocol or indicated by the access network device is the first paging group parameter, the UE can determine the paging group of the UE based on the first paging group parameter when the UE receives the first paging group parameter, and when the UE receives the second paging group parameter, the UE can determine the paging group of the UE based on the default paging group parameter.

As an example, if the paging group parameter specified in the protocol or indicated by the access network device is the second paging group parameter, the UE can determine the paging group of the UE based on the second paging group parameter when the UE receives the second paging group parameter, and when the UE receives the first paging group parameter, the UE can determine the paging group of the UE based on the default paging group parameter.

According to the method for determining a user paging group provided by the embodiment of the disclosure, when the first paging group parameter or the second paging group parameter is received, the paging group of the UE is determined based on the first paging group parameter or the second paging group parameter. Therefore, the UE negotiates with the core network and/or the access network, to determine the paging group of the UE based on the first paging group parameter or the second paging group parameter specified in the protocol or indicated by the base station, thereby effectively determining the paging group of the UE and ensuring the consistency in the understanding of the network side and the UE about the paging group.

In a possible implementation of the disclosure, for the UE in the inactive state, the paging group of the UE is determined based on the second paging group parameter, regardless of whether an extended discontinuous reception (eDRX) is activated or not. If the second paging group parameter is not provided, the paging group of the UE is determined based on the first paging group parameter.

In a possible implementation of the disclosure, for the UE in the inactive state, the paging group of the UE can be determined in different ways at two different scenarios: when the UE is in an eDRX cycle or when the UE is not in an eDRX cycle. That is, the paging group of the UE can be determined differently when the eDRX cycle is enabled or when the eDRX cycle is disabled for the UE in the inactive state.

According to the method for determining a user paging group provided by the embodiment of the disclosure, determining the paging group of the UE based on the first paging group parameter and/or the second paging group parameter includes:
if the UE is not in an eDRX cycle or is not operating in an eDRX mode, determining a target paging group parameter in a preset mode; and
determining the paging group of the UE based on the target paging group parameter. As a preferred embodiment, the paging group of the UE is determined based on the second paging group parameter.

Moreover, determining the paging group of the UE based on the first paging group parameter and/or the second paging group parameter further includes:
if the UE is in an eDRX cycle, and the UE is configured with an eDRX parameter in the idle state or is operating in an eDRX mode in the idle state, determining the target paging group parameter in one of the following ways:
if it is beyond a paging time window, determining the second paging group parameter as the target paging group parameter;
if it is within the paging time window, determining the target paging group parameter in the preset mode; and
determining the paging group of the UE based on the target paging group parameter. As a preferred embodiment, the paging group of the UE is determined based on the second paging group parameter.

Furthermore, determining the paging group of the UE based on the first paging group parameter and/or the second paging group parameter includes:
if the UE is in an eDRX cycle, and the UE is configured with both an eDRX parameter in the idle state and an eDRX parameter in the inactive state or is operating in both the eDRX mode in the idle state and the eDRX mode in the inactive state, determining the target paging group parameter in the preset mode; and
determining the paging group of the UE based on the target paging group parameter.

Further, determining the target paging group parameter in the preset mode includes any one of the following modes:
if the eDRX in the idle state and the eDRX in the inactive state use a common paging time window (PTW) window, selecting and using the second paging group parameter to determine the paging group of the UE within the PTW window; if the eDRX in the idle state and the eDRX in the inactive state use separate PTW windows, selecting and using the first paging group parameter or the second paging group parameter to determine the paging group of the UE within the PTW window corresponding to the eDRX in the idle state, and selecting and using the second paging group parameter to determine the paging group of the UE within the PTW window corresponding to the eDRX in the inactive state;
determining the maximum value of the first paging group parameter and the second paging group parameter as the target paging group parameter;
determining the minimum value of the first paging group parameter and the second paging group parameter as the target paging group parameter; and
determining the first paging group parameter or the second paging group parameter as the target paging group parameter.

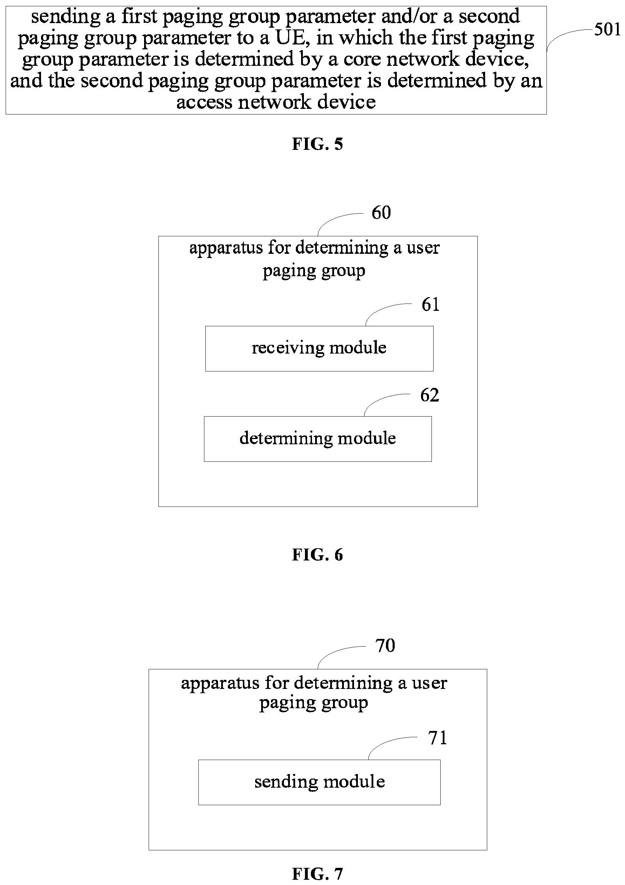

Another method for determining a user paging group provided by the embodiments of the disclosure is further described below in combination with FIG. 5.

FIG. 5 is a flowchart of a method for determining a user paging group provided by an embodiment of the disclosure. The method is applied to a network device, such as a base station.

As illustrated in FIG. 5, the method for determining a user paging group includes the following steps.

At step 501, a first paging group parameter and/or a second paging group parameter are sent to a UE, in which the first paging group parameter is determined by a core network device, and the second paging group parameter is determined by an access network device.

The first paging group parameter may be a probability of the core network device paging the UE, or may be a paging group identification configured by the core network for the UE, which is not limited in the embodiments of the disclosure.

The second paging group parameter may be a probability of the access network device paging the UE, or may be a paging group identification configured by the access network device for the UE, which is not limited in the embodiments of the disclosure.

The access network device may be a base station.

In the embodiment of the disclosure, since both the core network device and the access network device can page the UE, when negotiating with the UE on the paging group, the network side may negotiate with the UE through the core network device or the access network device, so that the access network device may send the first paging group parameter determined by the core network device or the second paging group parameter determined by the access network device separately to the UE, or send the first paging group parameter and the second paging group parameter simultaneously.

As a possible implementation, the access network device can send the first paging group parameter and/or the second paging group parameter to the UE via a broadcast signaling or a dedicated signaling.

For example, the terminal receives the first paging group parameter and/or the second paging group parameter via a RRC connection release message.

In the embodiment of the disclosure, the method for determining a user paging group of the embodiment of the disclosure may be used to determine a paging group of a UE that is in an idle state or an inactive state. The first paging group parameter and the second paging group parameter can be determined and received differently when the UE is in different states, which will be described below in detail by assuming that the UE is in an idle state and in an inactive state, respectively.

As a possible implementation, when the UE is in the idle state, the first paging group parameter is determined by negotiating with the core network device through a NAS procedure. That is, when the UE is in the idle state, the first paging group parameter can be sent to the UE not by the access network device.

As a possible implementation, when the UE is in the inactive state, the access network device can determine the first paging group parameter based on auxiliary information provided by the core network device and/or auxiliary information obtained from the UE.

As an example, the access network device sends the first paging group parameter sent by the core network device to the UE through transparent transmission.

It should be noted that since the core network device cannot communicate with the UE directly when the UE is in the inactive state, if the core network device needs to negotiate the paging group with the UE, the core network device can provide auxiliary information to the access network device through a UE context request/response message, so that the access network device can determine the first paging group parameter based on the auxiliary information, and send the first paging group parameter to the UE.

As a possible implementation, the access network device can send the second paging group parameter to the UE.

As an example, the access network device can determine the second paging group parameter based on the auxiliary information provided by the core network device and/or the auxiliary information obtained from the UE.

As an example, the second paging group parameter may be determined by the access network device based on auxiliary information provided by the terminal in a connected state. As a preferred embodiment, the auxiliary information may include, for example, a paging probability counted by the terminal.

It should be noted that when the UE is in the idle state or in the inactive state, the access network device can send the determined second paging group parameter to the UE via a RRC message, a broadcast signaling, or a dedicated signaling when it needs to negotiate a paging group with the UE. Moreover, the access network device may also obtain the auxiliary information provided by the core network device via the UE context request/response message to determine the second paging group parameter based on the auxiliary information.

As a possible implementation, when the access network device is an anchor base station, it forwards the second paging group parameter to a non-anchor base station via an interface message between base stations.

The anchor base station may refer to a base station that has established a connection with the core network device, and the non-anchor base station may refer to a base station that has not established a connection with the core network device.

It should be noted that since the non-anchor base station has not established a connection with the core network device, when the base station needs to determine the second paging group parameter based on the auxiliary information provided by the core network device, the non-anchor base station is unable to obtain the auxiliary information from the core network device, and thus the second paging group parameter cannot be determined. Therefore, after determining the second paging group parameter based on the auxiliary information provided by the core network device, the anchor base station can forward the second paging group parameter to the non-anchor base station through the interface message between the base stations, so that the non-anchor base station can send the second paging group parameter to the UE within its coverage.

According to the method for determining a user paging group provided by the embodiment of the disclosure, the network side device sends the first paging group parameter and/or the second paging group parameter to the UE, and the first paging group parameter is determined by the core network device, and the second paging group parameter is determined by the access network device. Therefore, the UE negotiates with the core network and/or the access network to determine the paging group of the UE, thereby effectively determining the paging group of the UE and ensuring the consistency in the understanding of the network side and the UE about the paging group.

In order to realize the above embodiments, the disclosure also provides an apparatus for determining a user paging group.

FIG. 6 is a block diagram of an apparatus 60 for determining a user paging group provided by an embodiment of the disclosure. The apparatus is applied to a UE.

As illustrated in FIG. 6, the apparatus 60 includes:

a receiving module 61, configured to receive a first paging group parameter and/or a second paging group parameter sent by a network side device, in which the first paging group parameter is determined by a core network device, and the second paging group parameter is determined by an access network device; and
a determining module 62, configured to determine a paging group of the UE based on the first paging group parameter and/or the second paging group parameter.

In practice, the apparatus 60 for determining a user paging group provided by the embodiment of the disclosure may be configured in any UE to perform the aforementioned method for determining a user paging group.

With the apparatus for determining a user paging group of the embodiment of the disclosure, the first paging group parameter determined by the core network device and/or the second paging group parameter determined by the access network device are received, and the paging group of the UE is determined based on the first paging group parameter and/or the second paging group parameter. Therefore, the UE negotiates with the core network and/or the access network to determine the paging group of the UE, thereby effectively determining the paging group of the UE and ensuring the consistency in the understanding of the network side and the UE about the paging group.

In a possible implementation of the disclosure, when the UE is in an idle state, the first paging group parameter is determined by negotiating with the core network device through the NAS procedure.

Further, in a possible implementation of the disclosure, when the UE is in an inactive state, the first paging group parameter and/or the second paging group parameter are determined by the access network device based on auxiliary information provided by the core network device and/or auxiliary information obtained from the UE.

Further, in another possible implementation of the disclosure, the above network side device is the access network device, and the receiving module 61 is further configured to:

receive by the UE the first paging group parameter and/or the second paging group parameter sent by the access network device via a broadcast signaling or a dedicated signaling.

Further, in another possible implementation of the disclosure, the determining module 62 is further configured to:
select a target paging group parameter from the first paging group parameter and/or the second paging group parameter based on a protocol; and
determine the paging group of the UE based on the target paging group parameter.

Further, in another possible implementation of the disclosure, the first paging group parameter and/or the second paging group parameter have a first priority and/or a second priority respectively, the determining module 62 is further configured to:
select the target paging group parameter from the first paging group parameter and/or the second paging group parameter based on the first priority and the second priority.

Further, in another possible implementation of the disclosure, the determining module 62 is further configured to:
select a maximum value or a minimum value of the first paging group parameter and/or the second paging group parameter, the first paging group parameter or the second paging group parameter, as the target paging group parameter.

Further, in another possible implementation of the disclosure, the determining module 62 is further configured to:
receive a configuration instruction;
select a target paging group parameter from the first paging group parameter and/or the second paging group parameter based on the configuration instruction; and
determine the paging group of the UE based on the target paging group parameter.

Further, in another possible implementation of the disclosure, the determining module 62 is further configured to:
determine that the UE is in an idle state or an inactive state.

Further, in another possible implementation of the disclosure, the determining module 62 is further configured to:
select the target paging group parameter from the first paging group parameter and/or the second paging group parameter based on a state of the UE.

Further, in another possible implementation of the disclosure, the determining module 62 is further configured to:
determine a paging type monitored by the UE; and
select the target paging group parameter from the first paging group parameter and/or the second paging group parameter based on the paging type monitored by the UE.

Further, in another possible implementation of the disclosure, the determining module 62 is further configured to:
in response to the received first paging group parameter or the received second paging group parameter being consistent with a paging group parameter specified in a protocol or indicated by the access network device, determine the paging group of the UE based on the received first paging group parameter or the received second paging group parameter; or
in response to the received first paging group parameter or the received second paging group parameter being inconsistent with a paging group parameter specified in a protocol or indicated by the access network device, determine the paging group of the UE based on a default paging group parameter.

It is noted that the foregoing explanatory description of the embodiments of the method for determining a user paging group shown in FIGS. 1-4 is also applicable to the embodiments of the apparatus 60 for determining a user paging group, which will not be repeated herein.

With the apparatus for determining a user paging group of the embodiment of the disclosure, the first paging group parameter determined by the core network device and/or the second paging group parameter determined by the access network device are received, the target paging group parameter is selected from the first paging group parameter and/or the second paging group parameter according to the protocol, and the paging group of the UE is determined based on the target paging group parameter. Therefore, the UE negotiates with the core network and/or the access network, to select the target paging group parameter from the first paging group parameter and/or the second paging group parameter according to the protocol and determine the paging group of the UE, thereby effectively determining the paging group of the UE and ensuring the consistency in the understanding of the network side and the UE about the paging group.

In order to realize the above embodiments, the disclosure also provides an apparatus for determining a user paging group.

FIG. 7 is a block diagram of an apparatus 70 for determining a user paging group provided by an embodiment of the disclosure. The apparatus is applied to a network side device such as a base station.

As illustrated in FIG. 7, the apparatus 70 includes:
a sending module 71, configured to send a first paging group parameter and/or a second paging group parameter to a UE, in which the first paging group parameter is determined by a core network device, and the second paging group parameter is determined by an access network device.

In practice, the apparatus 70 for determining a user paging group provided by the embodiment of the disclosure may be configured in an access network device to perform the aforementioned method for determining a user paging group.

In a possible implementation of the disclosure, the above network side device is the access network device, and the apparatus 70 further includes:
a determination module, configured to determine by the access network device the first paging group parameter and/or the second paging group parameter based on auxiliary information provided by a core network device and/or auxiliary information obtained from the UE when the UE is an inactive state.

Further, in a possible implementation of the disclosure, the sending module 71 is further configured to:
in response to the UE being in an inactive state, send by the access network device the first paging group parameter and/or the second paging group parameter to the UE via a broadcast signaling or a dedicated signaling.

Further, in a possible implementation of the disclosure, the sending module 71 is further configured to:
in response to the access network device being an anchor base station, forward by the anchor base station the second paging group parameter to a non-anchor base station via an interface message between base stations.

It should be noted that the foregoing explanatory description of the embodiments of the method for determining a user paging group shown in FIG. 5 is also applicable to the embodiments of the apparatus 70 for determining a user paging group, which will not be repeated herein.

With the apparatus for determining a user paging group of the embodiment of the disclosure, the network side device sends the first paging group parameter and/or the second paging group parameter to the UE, and the first paging group parameter is determined by the core network device, and the second paging group parameter is determined by the access network device. Therefore, the UE negotiates with the core network and/or the access network to determine the paging group of the UE, thereby effectively determining the paging group of the UE and ensuring the consistency in the understanding of the network side and the UE about the paging group. In order to realize the above embodiments, the disclosure also provides a UE.

The embodiments of the disclosure provide a UE. The UE includes: a processor, a transceiver, a memory and executable programs stored on the memory and capable of being executed by the processor. When the executable programs are executed by the processor, the processor is capable of performing the following operations:
receiving a first paging group parameter and/or a second paging group parameter sent by a network side device, in which the first paging group parameter is determined by a core network device, and the second paging group parameter is determined by an access network device; and
determining a paging group of the UE based on the first paging group parameter and/or the second paging group parameter.

The processor may include various types of storage mediums that are non-transitory computer storage mediums capable of continuing to memorize the information stored thereon after the UE is powered down.

The processor may be connected to the memory via a bus or the like for reading the executable programs stored on the memory, e.g., as shown in at least one of FIGS. 1 to 4.

In a possible implementation of the disclosure, when the UE is in an idle state, the first paging group parameter is determined by negotiating with the core network device through a NAS procedure.

Further, in a possible implementation of the disclosure, in response to the UE being in an inactive state, the first paging group parameter and/or the second paging group parameter are determined by the access network device based on auxiliary information provided by the core network device and/or auxiliary information obtained from the UE.

Further, in a possible implementation of the disclosure, the network side device is the access network device, and receiving the first paging group parameter and/or the second paging group parameter sent by the access network device, includes:
receiving by the UE the first paging group parameter and/or the second paging group parameter sent by the access network device via a broadcast signaling or a dedicated signaling.

Further, in a possible implementation of the disclosure, determining the paging group of the UE based on the first paging group parameter and/or the second paging group parameter, includes:
selecting a target paging group parameter from the first paging group parameter and/or the second paging group parameter based on a protocol; and
determining the paging group of the UE based on the target paging group parameter.

Further, in a possible implementation of the disclosure, the first paging group parameter and/or the second paging group parameter have a first priority and/or a second priority respectively, and selecting the target paging group parameter from the first paging group parameter and/or the second paging group parameter based on the protocol, includes:
selecting the target paging group parameter from the first paging group parameter and/or the second paging group parameter based on the first priority and the second priority.

Further, in a possible implementation of the disclosure, selecting the target paging group parameter from the first paging group parameter and/or the second paging group parameter based on the protocol, includes:
selecting a maximum value or a minimum value of the first paging group parameter and/or the second paging group parameter, the first paging group parameter or the second paging group parameter, as the target paging group parameter.

Further, in a possible implementation of the disclosure, determining the paging group of the UE based on the first paging group parameter and/or the second paging group parameter, includes:
receiving a configuration instruction;
selecting a target paging group parameter from the first paging group parameter and/or the second paging group parameter based on the configuration instruction; and
determining the paging group of the UE based on the target paging group parameter.

Further, in a possible implementation of the disclosure, before receiving the first paging group parameter and/or the second paging group parameter, it further includes:
determining that the UE is in an idle state or an inactive state.

Further, in a possible implementation of the disclosure, selecting the target paging group parameter from the first paging group parameter and/or the second paging group parameter based on the protocol or the configuration instruction, includes:
selecting the target paging group parameter from the first paging group parameter and/or the second paging group parameter based on a state of the UE.

Further, in a possible implementation of the disclosure, selecting the target paging group parameter from the first paging group parameter and/or the second paging group parameter based on the protocol or the configuration instruction, includes:
determining a paging type monitored by the UE; and
selecting the target paging group parameter from the first paging group parameter and/or the second paging group parameter based on the paging type monitored by the UE.

Further, in a possible implementation of the disclosure, determining the paging group of the UE based on the first paging group parameter and/or the second paging group parameter, includes:
in response to the received first paging group parameter or the received second paging group parameter being consistent with a paging group parameter specified in a protocol or indicated by the access network device, determining the paging group of the UE based on the received first paging group parameter or the received second paging group parameter; or
in response to the received first paging group parameter or the received second paging group parameter being inconsistent with a paging group parameter specified in a protocol or indicated by the access network device, determining the paging group of the UE based on a default paging group parameter.

In order to realize the above embodiments, the disclosure also provides a network side device.

The embodiments of the disclosure provide a network side device, including a processor, a transceiver, a memory and executable programs stored on the memory and capable of being executed by the processor. When the executable programs are executed by the processor, the processor is capable of performing the following operation:
sending a first paging group parameter and/or a second paging group parameter to a UE, in which the first paging group parameter is determined by a core network device, and the second paging group parameter is determined by an access network device.

The processor may include various types of storage mediums that are non-transitory computer storage mediums capable of continuing to memorize the information stored thereon after the UE is powered down.

The processor may be connected to the memory via a bus or the like for reading the executable programs stored on the memory, e.g., as shown in FIG. 5.

In a possible implementation of the disclosure, the network side device is the access network device, and before sending the first paging group parameter and/or the second paging group parameter to the UE, it further includes:
in response to the UE being in an inactive state, determine by the access network device the first paging group parameter and/or the second paging group parameter based on auxiliary information provided by the core network device and/or auxiliary information obtained from the UE.

Further, in a possible implementation of the disclosure, the network side device is the access network device, and sending by the access network device the first paging group parameter and/or the second paging group parameter to the UE, includes:
in response to the UE being in an inactive state, sending the first paging group parameter and/or the second paging group parameter to the UE via a broadcast signaling or a dedicated signaling.

Further, in a possible implementation of the disclosure, the network side device is the access network device, and the processor is further configured to perform the following operation:
in response to the access network device being an anchor base station, forwarding by the anchor base station the second paging group parameter to a non-anchor base station via an interface message between base stations.

In order to realize the above embodiments, the disclosure also provides a system for determining a user paging group, including a UE and a network side device.

The UE includes: a transceiver, a memory and a processor connected to the transceiver and the memory respectively. The processor is configured to control the transceiver to transmit and receive wireless signals and to perform the following operations by executing computer-executable instructions on the memory:
receiving a first paging group parameter and/or a second paging group parameter sent by a network side device, in which the first paging group parameter is determined by a core network device, and the second paging group parameter is determined by an access network device; and
determining a paging group of the UE based on the first paging group parameter and/or the second paging group parameter.

The network side device includes: a transceiver, a memory, and a processor connected to the transceiver and the memory, respectively. The processor is configured the transceiver to control transmit and receive wireless signals and to perform the following operation by executing computer executable instructions on the memory:
sending a first paging group parameter and/or a second paging group parameter to a UE, in which the first paging group parameter is determined by a core network device, and the second paging group parameter is determined by an access network device.

In order to realize the above embodiments, the disclosure also provides a computer storage medium.

The embodiments of the disclosure provide a computer storage medium having executable programs stored thereon. When the executable programs are executed by a processor, the method for determining a user paging group provided by any of the foregoing technical solutions, e.g., as shown at least one of FIGS. 1 to 5, may be implemented.

In order to realize the above embodiments, the disclosure also provides a computer program product including computer programs. When the computer programs are executed by a processor, the method for determining a user paging group as previously described is implemented.

In order to realize the above embodiments, the disclosure also provides a computer program. When the computer program is executed by a processor, the method for determining a user paging group as described in the embodiments of the disclosure is implemented.

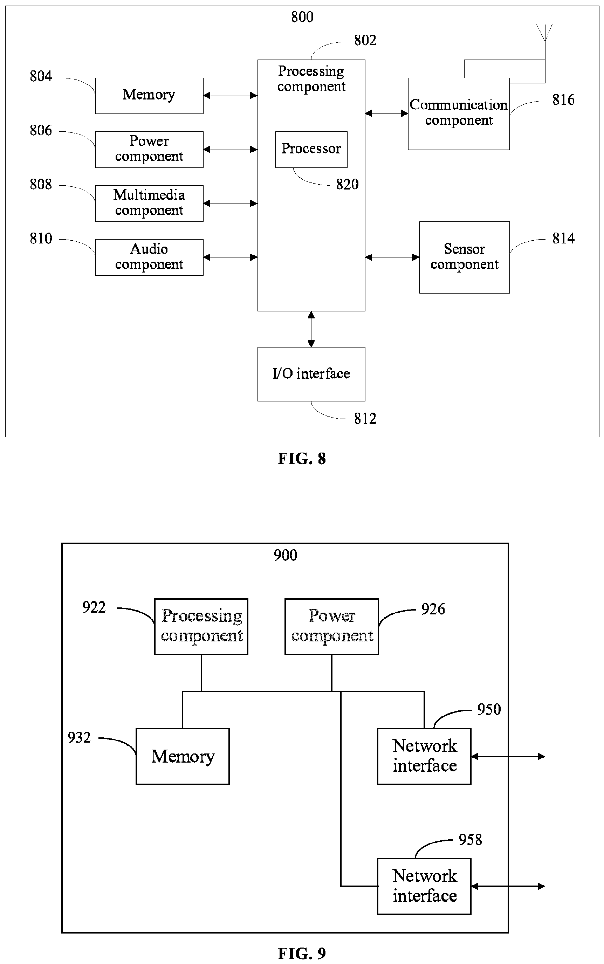

FIG. 8 is a block diagram of a UE 800 according to an embodiment of the disclosure. For example, the UE 800 may be a mobile phone, a computer, a digital broadcasting UE, a message transceiver device, a game console, a tablet device, a medical device, a fitness device and a personal digital assistant.

As illustrated in FIG. 8, the UE 800 may include at least one of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone call, data communication, camera operation, and recording operation. The processing component 802 may include at least one processor 820 to perform instructions to implement all or part of the steps in the above described methods. Moreover, the processing component 802 may include at least one module which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 806 provides power to various components of the UE 800. The power component 806 may include a power management system, at least one power source, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a calling mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes at least one sensor to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of a user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In an exemplary embodiment, the communication component 816 receives a broadcast signal from an external broadcast management system or broadcast associated information via a broadcast channel. In an exemplary embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the UE 800 may be implemented with at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described methods.

In the exemplary embodiments, there is also provided a non-transitory computer readable storage medium including instructions, such as the memory 804, executable by the processor 820 in the UE 800, for implementing the above methods. For example, the non-transitory computer-readable storage medium may be a ROM, a Random Access Memory (RAM), a CD-ROM, a magnetic tape, a floppy disc, and an optical data storage device.

FIG. 9 is a block diagram of a base station 900 according to an embodiment of the disclosure. For example, the base station 900 may be provided as a base station. As illustrated in FIG. 9, the base station 900 includes a processing component 922 including at least one processor, and memory resources represented by a memory 932 for storing instructions that can be executed by the processing component 922, such as applications. The application programs stored in the memory 932 may include one or more modules each corresponding to a set of instructions. In addition, the processing component 922 is configured to execute the instructions to perform the method described above that is applied to the base station, e.g., the method shown in FIG. 5.

The base station 900 may also include a power component 926 configured to perform power management of the base station 900, a wired or wireless network interface 950 configured to connect the base station 900 to a network, and an I/O interface 958. The base station 900 may operate on an operating system stored in the memory 932, such as Windows ServerTM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining a user paging group, applied to a user equipment (UE), comprising:
receiving a first paging group parameter and/or a second paging group parameter sent by a network side device, wherein the first paging group parameter is determined by a core network device, and the second paging group parameter is determined by an access network device; and
determining a paging group of the UE based on the first paging group parameter and/or the second paging group parameter.

2. The method of claim 1, wherein in response to the UE being in an idle state, the first paging group parameter is determined by negotiating with the core network device through a non-access stratum (NAS) procedure.

3. The method of claim 1, wherein in response to the UE being in an inactive state, the first paging group parameter and/or the second paging group parameter are determined by the access network device based on auxiliary information provided by the core network device and/or auxiliary information obtained from the UE.

4. The method of claim 3, wherein the network side device is the access network device, and receiving the first paging group parameter and/or the second paging group parameter sent by the access network device, comprises:
receiving by the UE the first paging group parameter and/or the second paging group parameter sent by the access network device via a broadcast signaling or a dedicated signaling.

5. The method of claim 1, wherein determining the paging group of the UE based on the first paging group parameter and/or the second paging group parameter, comprises:
selecting a target paging group parameter from the first paging group parameter and/or the second paging group parameter based on a protocol; and
determining the paging group of the UE based on the target paging group parameter.

6. The method of claim 5, wherein the first paging group parameter and/or the second paging group parameter have a first priority and/or a second priority respectively, and selecting the target paging group parameter from the first paging group parameter and/or the second paging group parameter based on the protocol, comprises:
selecting the target paging group parameter from the first paging group parameter and/or the second paging group parameter based on the first priority and the second priority.

7. The method of claim 5, wherein selecting the target paging group parameter from the first paging group parameter and/or the second paging group parameter based on the protocol, comprises:
selecting a maximum value or a minimum value of the first paging group parameter and/or the second paging group parameter, the first paging group parameter or the second paging group parameter, as the target paging group parameter.

8. The method of claim 1, wherein determining the paging group of the UE based on the first paging group parameter and/or the second paging group parameter, comprises:
receiving a configuration instruction;
selecting a target paging group parameter from the first paging group parameter and/or the second paging group parameter based on the configuration instruction; and
determining the paging group of the UE based on the target paging group parameter.

9. The method of claim 5 or 8, before receiving the first paging group parameter and/or the second paging group parameter, further comprising:
determining that the UE is in an idle state or an inactive state.

10. The method of claim 9, wherein selecting the target paging group parameter from the first paging group parameter and/or the second paging group parameter based on the protocol or the configuration instruction, comprises:
selecting the target paging group parameter from the first paging group parameter and/or the second paging group parameter based on a state of the UE.

11. The method of claim 5 or 8, wherein selecting the target paging group parameter from the first paging group parameter and/or the second paging group parameter based on the protocol or the configuration instruction, comprises:
determining a paging type monitored by the UE; and
selecting the target paging group parameter from the first paging group parameter and/or the second paging group parameter based on the paging type monitored by the UE.

12. The method of claim 1, wherein determining the paging group of the UE based on the first paging group parameter or the second paging group parameter, comprises:
in response to the received first paging group parameter or the received second paging group parameter being consistent with a paging group parameter specified in a protocol or indicated by the access network device, determining the paging group of the UE based on the received first paging group parameter or the received second paging group parameter; or
in response to the received first paging group parameter or the received second paging group parameter being inconsistent with a paging group parameter specified in a protocol or indicated by the access network device, determining the paging group of the UE based on a default paging group parameter.

13. A method for determining a user paging group, applied to a network side device, comprising:
sending a first paging group parameter and/or a second paging group parameter to a user equipment (UE), wherein the first paging group parameter is determined by a core network device, and the second paging group parameter is determined by an access network device.

14. The method of claim 13, wherein the network side device is the access network device, and before sending the first paging group parameter and/or the second paging group parameter to the UE, the method further comprises:
in response to the UE being in an inactive state, determining by the access network device the first paging group parameter and/or the second paging group parameter based on auxiliary information provided by the core network device and/or auxiliary information obtained from the UE.

15. The method of claim 14, wherein sending the first paging group parameter and/or the second paging group parameter to the UE, comprises:
in response to the UE being in an inactive state, sending by the access network device the first paging group parameter and/or the second paging group parameter to the UE via a broadcast signaling or a dedicated signaling.

16. The method of claim 14, further comprising:
in response to the access network device being an anchor base station, forwarding by the anchor base station the second paging group parameter to a non-anchor base station via an interface message between base stations.

17. An apparatus for determining a user paging group, applied to a user equipment (UE), comprising:
a receiving module, configured to receive a first paging group parameter and/or a second paging group parameter sent by a network side device, wherein the first paging group parameter is determined by a core network device, and the second paging group parameter is determined by an access network device; and
a determining module, configured to determine a paging group of the UE based on the first paging group parameter and/or the second paging group parameter.

18. An apparatus for determining a user paging group, applied to a network side device, comprising:
a sending module, configured to send a first paging group parameter and/or a second paging group parameter to a user equipment (UE), wherein the first paging group parameter is determined by a core network device, and the second paging group parameter is determined by an access network device.

19. A user equipment (UE), comprising: a transceiver, a memory, and a processor connected to the transceiver and the memory respectively, configured to control the transceiver to transmit and receive wireless signals and to perform the following operations by executing computer-executable instructions on the memory:
receiving a first paging group parameter and/or a second paging group parameter sent by a network side device, wherein the first paging group parameter is determined by a core network device, and the second paging group parameter is determined by an access network device; and
determining a paging group of the UE based on the first paging group parameter and/or the second paging group parameter.

20. The UE of claim 19, wherein in response to the UE being in an idle state, the first paging group parameter is determined by negotiating with the core network device through a non-access stratum (NAS) procedure.

21. The UE of claim 19, wherein in response to the UE being in an inactive state, the first paging group parameter and/or the second paging group parameter are determined by the access network device based on auxiliary information provided by the core network device and/or auxiliary information obtained from the UE.

22. The UE of claim 21, wherein the network side device is the access network device, and receiving the first paging group parameter and/or the second paging group parameter sent by the access network device, comprises:
receiving by the UE the first paging group parameter and/or the second paging group parameter sent by the access network device via a broadcast signaling or a dedicated signaling.

23. The UE of claim 19, wherein determining the paging group of the UE based on the first paging group parameter and/or the second paging group parameter, comprises:
selecting a target paging group parameter from the first paging group parameter and/or the second paging group parameter based on a protocol; and
determining the paging group of the UE based on the target paging group parameter.

24. The UE of claim 23, wherein the first paging group parameter and/or the second paging group parameter each have a first priority and/or a second priority respectively, and selecting the target paging group parameter from the first paging group parameter and/or the second paging group parameter based on the protocol, comprises:
selecting the target paging group parameter from the first paging group parameter and/or the second paging group parameter based on the first priority and the second priority.

25. The UE of claim 23, wherein selecting the target paging group parameter from the first paging group parameter and/or the second paging group parameter based on the protocol, comprises:
selecting a maximum value or a minimum value of the first paging group parameter and/or the second paging group parameter, the first paging group parameter or the second paging group parameter, as the target paging group parameter.

26. The UE of claim 19, wherein determining the paging group of the UE based on the first paging group parameter and/or the second paging group parameter, comprises:
receiving a configuration instruction;
selecting a target paging group parameter from the first paging group parameter and/or the second paging group parameter based on the configuration instruction; and
determining the paging group of the UE based on the target paging group parameter.

27. The UE of claim 23 or 26, before receiving the first paging group parameter and/or the second paging group parameter, further comprising:
determining that the UE is in an idle state or an inactive state.

28. The UE of claim 27, wherein selecting the target paging group parameter from the first paging group parameter and/or the second paging group parameter based on the protocol or the configuration instruction, comprises:
selecting the target paging group parameter from the first paging group parameter and/or the second paging group parameter based on a state of the UE.

29. The UE of claim 23 or 26, wherein selecting the target paging group parameter from the first paging group parameter and/or the second paging group parameter based on the protocol or the configuration instruction, comprises:
determining a paging type monitored by the UE; and
selecting the target paging group parameter from the first paging group parameter and/or the second paging group parameter based on the paging type monitored by the UE.

30. The UE of claim 19, wherein determining the paging group of the UE based on the first paging group parameter and/or the second paging group parameter, comprises:
in response to the received first paging group parameter or the received second paging group parameter being consistent with a paging group parameter specified in a protocol or indicated by the access network device, determining the paging group of the UE based on the received first paging group parameter or the received second paging group parameter; or
in response to the received first paging group parameter or the received second paging group parameter being inconsistent with a paging group parameter specified in a protocol or indicated by the access network device, determining the paging group of the UE based on a default paging group parameter.

31. A network side device, comprising: a transceiver, a memory, and a processor connected to the transceiver and the memory respectively, configured to control the transceiver to transmit and receive wireless signals and to perform the following operation by executing computer-executable instructions on the memory:
sending a first paging group parameter and/or a second paging group parameter to a user equipment (UE), wherein the first paging group parameter is determined by a core network device, and the second paging group parameter is determined by an access network device.

32. The network side device of claim 31, wherein the network side device is the access network device, and before sending the first paging group parameter and/or the second paging group parameter to the UE, further comprising:
in response to the UE being in an inactive state, determine by the access network device the first paging group parameter and/or the second paging group parameter based on auxiliary information provided by the core network device and/or auxiliary information obtained from the UE.

33. The network side device of claim 32, wherein the network side device is the access network device, and sending by the access network device the first paging group parameter and/or the second paging group parameter to the UE, comprises:
in response to the UE being in an inactive state, sending the first paging group parameter and/or the second paging group parameter to the UE via a broadcast signaling or a dedicated signaling.

34. The network side device of claim 32, wherein the network side device is the access network device, and the processor is further configured to perform the following operation:
in response to the access network device being an anchor base station, forwarding by the anchor base station the second paging group parameter to a non-anchor base station via an interface message between base stations.

35. A computer storage medium having computer-executable instructions stored thereon, wherein when the computer-executable instructions are executed by a processor, the method of any one of claims 1 to 12 or 13 to 16 is implemented.
